# EUROPEAN PATENT SPECIFICATION

(11) **EP 1 092 896 B1**
(45) Date of publication and mention of the grant of the patent: **02.04.2003**
(21) Application number: 00127909.0
(22) Date of filing: 31.01.1997
(51) Int. Cl.: F16H 61/02, B25B 21/00

(54) **Automatic variable transmission for a power tool**
Automatikgetriebe für Handwerkzeug
Transmission automatique variable pour outil à main

(30) Priority: 05.09.1996 US 708764
(43) Date of publication of application: 18.04.2001
(62) Divisional of application: 97300658.8
(73) Proprietor: Black & Decker Inc., Newark Delaware 19711 (US)
(72) Inventor: Cannaliato, Michael F., Abingdon, Maryland 21009 (US)
(74) Representative: Dlugosz, Anthony Charles

(56) References cited:
- EP-A- 0 329 852
- US-A- 2 139 221
- US-A- 4 323 354
- US-A- 4 823 885

## Description

The present invention relates to a power tool such as a rotatable drill, power screwdriver, or rotatable cutting device. More particularly, the present invention relates to an automatic variable transmission to switch speed of an output shaft as described in EP-A-0 329 852 which discloses the features of the preamble of claim 1.

In the consumer market, it would be desirable to have drills and power screwdrivers which have a variable speed transmission automatically changing the speed of the output spindle in response to torque. Variable two-speed drive is desirable so that, during the insertion of a threaded fastener, the threaded fastener can rotate rapidly at the beginning of insertion into the part and towards the end of insertion, the transmission gears down moving it to a slower speed applying more torque onto the threaded fastener to shore-up the fastener upon full insertion of the fastener into the part. The variable transmission prevents motor burnout in the high speed mode as well as enabling the motor to work more efficiently. Of course, these designs are not unique to consumer devices, but are equally desirable for professional power tools.

Accordingly, it is an object of the present invention to provide a variable transmission for power tools embodying the foregoing design objectives.

In accordance with the invention, an automatic transmission for a power tool comprises a first shaft adapted to be rotatably secured in a tool housing, a second shaft to be rotatably secured in the tool housing, an output member coupled with the second shaft, a first gear positioned on the first shaft adapted to couple with a pinion of a motor, a drive sleeve fixed on the second shaft, a second gear axially movable on the second shaft with the second gear selectively engagable with the drive sleeve, characterized in that a third gear axially movable on the first shaft and meshing with the second gear, a fourth gear fixed on the second shaft, the fourth gear meshing with the first shaft, and a mechanism for adjusting speed of the second shaft. The mechanism for adjusting speed is axially movable which, in turn, causes the third gear to engage or disengage the second gear with the drive sleeve and to drive the first shaft which, in turn, drives the fourth gear which drives the second shaft driving the output member between a first and second speed.

The mechanism for adjusting speed includes a clutch mechanism on the first shaft and a cam mechanism axially sliding the third gear on the first shaft. The clutch mechanism includes a first biased ring member, which is axially slidable on the first shaft, and a second biased ring member which is axially slidable on and engagably meshed with the first shaft, where the first ring member engages the second ring to drive the first shaft. Further the first ring member has a conical surface and the second ring has an extending skirt with a conical surface to mate with the first ring member conical surface. Also, the cam mechanism includes a cam member on the first or third gear and a mating cam surface on the other of the first or third gear.

In accordance with a second aspect of the invention, a power tool includes a tool housing, a motor in the tool housing, a power source for energising the motor, an. output member coupled with the motor for rotating at a desired speed, and an automatic transmission in accordance with the invention described above.

An embodiment of an automatic transmission and a power tool according to the invention will now be further described with reference to the accompanying drawings in which:
Figure 1 is a side view partially in section of an embodiment of a power tool in accordance with the present invention with the speed adjustment mechanism in a disengaged position; and
Figure 2 is a side view like Figure 1 with the speed adjustment mechanism in an engaged position.

The preferred embodiment of the present invention may be either a corded or cordless (battery operated) device such as a portable electric device such as a power tool, drill or screwdriver.

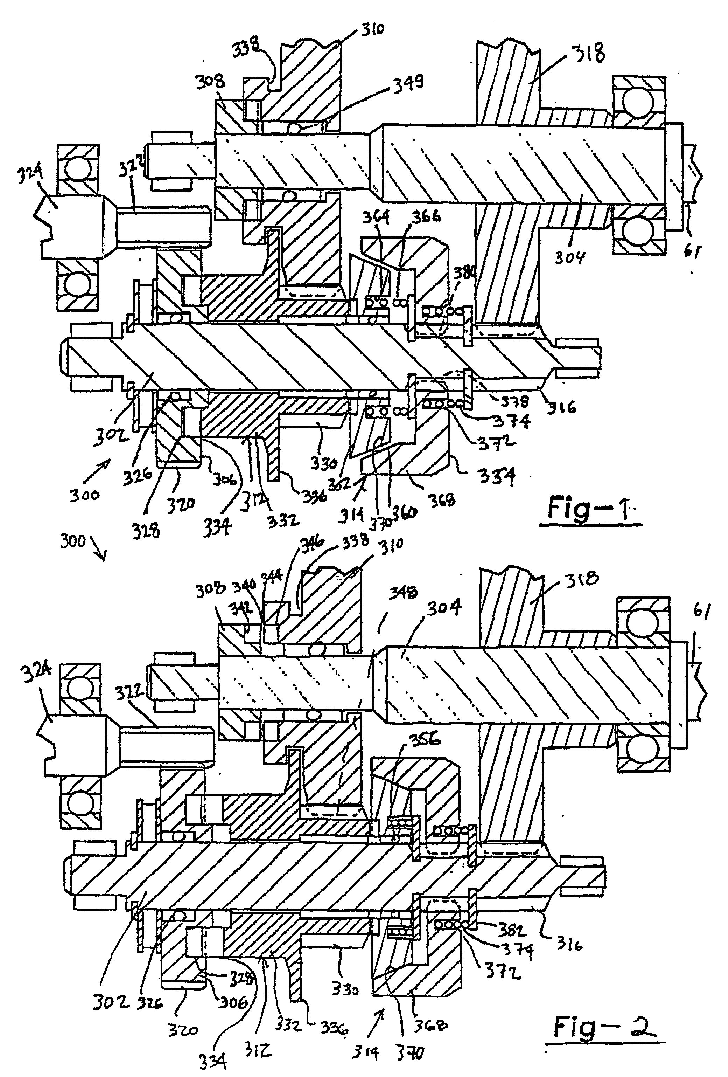

As shown in Figures 1 and 2 the transmission is a spur gear design and may be utilised in a drill housing.

The transmission 300 includes a first shaft 302, a second shaft 304 secured with the output member 61, a first reduction gear 306 on the first shaft, a first drive sleeve 308 on the second shaft, a second gear 310 on the second shaft, a third gear 312 on the first shaft 302, and a mechanism 314 for adjusting the speed of the transmission. Also, the first shaft 302 includes teeth 316 which drive a fourth gear 318 secured to the second shaft 304.

The first reduction gear 306 includes teeth 320 to mesh with teeth 322 on the motor shaft 324. Gear 306 is rotatably mounted on the shaft 302 via a bearing 326. The gear 306 includes an annular recess 328 on its outer surface. The annular recess 328 includes at least one cam surface or cam member.

The third gear 312 is adjacent the first gear 306 and is axially movable along the shaft 302. The third gear 312 includes a first collar portion having teeth 330 meshingly engaging with the second gear teeth. Also, the third gear 312 includes a second collar portion 332 adjacent the first portion which, at its free end, includes a flange 334 with the reciprocating cam member or cam recess, like those previously discussed, mating with the first gear 306. Also, an extending radial flange 336 is positioned between the first and second collar portions which extends into a recess 338 in the second gear 310 which enhances movement of the second gear 310 by the third gear 312.

The drive sleeve 308 is fixedly secured to the second shaft 304. The drive sleeve 308, on one of its end faces, includes an alternating arrangement of lugs 340 and recesses 342 which mate with an alternating set of lugs 344 and recesses 346 in the end face of the gear 310. Thus, when the lugs 340, 344 and recesses 342, 346 are engaged with one another, the drive sleeve 308 is driven by the second gear 310 which, in turn, drives the output shaft 304.

The second gear 310 includes teeth 348 and is axially slidable along the shaft 304 and is rotatable on the shaft 304 via bearing 349. As mentioned above, the gear 310 includes a radial recess 338 to receive the radial flange 336 of the third gear 312 to enable the axial movement of the second gear 310 to move the lug and recess arrangement out of contact with the drive sleeve 308 to enable the transmission to shift to its second speed.

The mechanism for adjusting speed 314 includes a first annular member 352 and a second annular member 354. The first annular member 352 is rotatably supported on the shaft 302 via a bearing 356. The first annular member 352 is axially slidable along the shaft 302. The outer circumferential surface of the first annular member 352 has a conical surface 360. Also, the first annular member 352 includes a recess 364 on its front face which receives a spring 366 which biases the first annular member 352 and 312. Spring 366 also determines the shift point by applying load to the cam surface 328.

The second annular member 354 includes a skirt 368 which has a inner circumferential surface which includes a conical portion 370 that is adjacent the conical surface 360 of the first annular member 352. The conical surfaces 360, 370 correspond to one another. The second annular member 354 also includes a circumferential recess 372 which retains a biasing spring 374. The annular member 354 also includes a central aperture 378 which includes teeth 380 which mesh with the teeth 316 of the first shaft 302. A thrust washer 382 acts as a stop for the biasing member 374.

The fourth gear 318 includes teeth 386 which mesh with teeth 316 of the first shaft 302. The fourth gear 318 is fixably secured to the second shaft 304.

In operation, in a first speed, the motor shaft 322 rotates the first gear 306 which, in turn, rotates the third gear 312 which rotates the second gear 310. In the first position, the lugs and recesses of the second gear and drive sleeve are engaged so that the drive sleeve rotates the output shaft 304 and the output member. As the torque increases, the transmission shifts from high speed to low speed. As this occurs, the first gear 306 rotates with respect to the first shaft 302 causing the cam member 326 and surface 334 to separate with respect to one another. As this happens, the third gear 312 is moved axially along the shaft 302. As the third gear 312 moves axially, it in turn axially moves the second gear 310 along the second shaft 304 to disengage the second gear 310 from the fixed sleeve 308 therefore decoupling the rotation of the shaft 304 by the fixed sleeve 308. As the third gear 312 moves axially, it moves the first annular member 352 axially, which causes its conical face to engage the conical face of the second annular member 354, which imparts the rotation from the motor shaft onto the second annular member 354 which, in turn, via teeth 380 and shaft teeth 316 rotates the shaft 302. As the shaft 302 begins to rotate, the teeth 316 meshing with the gear teeth 386 begins to rotate the output shaft 304 at a lower speed. Thus, the transmission automatically shifts between a high and low speed.

## Claims

1. An automatic transmission for a power tool comprising:
a first rotatable shaft (302);
a second rotatable shaft (304);
an output member (61) coupled with said second shaft (304);
a first gear (306) positioned on said first shaft (302) for coupling with a pinion (322) of a motor;
a drive sleeve (308) fixed on said second shaft (304);
a second gear (310) axially movable on said second shaft (304), said second gear (310) selectively engagable with said drive sleeve (308); **characterized in that**
a third gear (312) axially movable on said first shaft (302), said third gear (312) meshing with said second gear (310);
a fourth gear (318) fixed on said second shaft (304), said fourth gear (318) meshing with teeth on said first shaft (302);
mechanism for adjusting speed (314) of said second shaft (304), said mechanism for adjusting speed (314) axially moving said third gear (312) for engaging and disengaging said second gear (310) with said driving sleeve (308) and said mechanism for adjusting speed (314) driving said first shaft (302) for driving said fourth (318) gear which, in turn, drives said second shaft (304) driving said output member (61) between a first and second speed.

2. An automatic transmission according to claim 1 wherein the mechanism for adjusting speed includes a clutch mechanism (352, 354) on the first shaft (302) and a cam mechanism for axially sliding the third gear (312) on the first shaft (302).

3. An automatic transmission according to claim 2 wherein the clutch mechanism includes a first biased ring member (352) which is axially slideable on the first shaft (302) and a second biased ring member (354) which is axially slideable on and engageably meshed with the first shaft (302) such that the first ring member (352) engages the second ring member (354) to drive the first shaft (302).

## Patentansprüche

1. Automatisches Getriebe für ein kraftgetriebenes Werkzeug aufweisend:
eine erste drehbare Welle (302),
eine zweite drehbare Welle (304),
ein mit der zweiten Welle (304) gekoppeltes Ausgangselement (61),
ein auf der ersten Welle (302) angeordnetes erstes Zahnrad (306) zur Kopplung mit einem Ritzel (322) eines Motors,
eine auf der zweiten Welle (304) befestigte Antriebsbuchse (306),
ein axial auf der zweiten Welle (304) bewegbares zweites Zahnrad (310), das wahlweise mit der Antriebsbuchse (308) in Eingriff bringbar ist,
**gekennzeichnet durch**
ein axial auf der ersten Welle (302) bewegbares drittes Zahnrad (312), das mit dem zweiten Zahnrad (310) kämmt,
ein auf der zweiten Welle (304) befestigtes viertes Zahnrad (318), das mit Zähnen an der ersten Welle (302) kämmt,
einen Mechanismus zur Geschwindigkeitseinstellung (314) der zweiten Welle (304), der das dritte Zahnrad (312) zum Eingriff und zum Außereingriff des zweiten Zahnrads (301) mit der Antriebsbuchse (308) axial bewegt und der die erste Welle (302) zum Antrieb des vierten Zahnrades (318) antreibt, das seinerseits die das Ausgangselement (61) zwischen einer ersten und einer zweiten Geschwindigkeit antreibende zweite Welle (304) antreibt.

2. Automatisches Getriebe nach Anspruch 1, bei dem der Mechanismus zur Geschwindigkeitseinstellung einen Kupplungsmechanismus (352, 354) auf der ersten Welle (302) und einen Nockenmechanismus zur axialen Verschiebung des dritten Zahnrades (312) auf der ersten Welle (302) aufweist.

3. Automatisches Getriebe nach Anspruch 2, bei dem der Kupplungsmechanismus ein erstes vorgespanntes Ringelement (352), das axial auf der ersten Welle (302) verschiebbar ist, und ein zweites vorgespanntes Ringelement (354) aufweist, das axial auf der ersten Welle (302) verschiebbar ist und mit dieser in kämmendem Eingriff steht, so dass das erste Ringelement (352) zum Antreiben der ersten Welle (302) in Eingriff mit dem zweiten Ringelement (354) kommt.

## Revendications

1. Transmission automatique pour un outil électrique, comprenant :
- un premier axe rotatif (302) ;
- un deuxième axe rotatif (304);
- un organe de sortie (61) couplé audit deuxième axe (304) ;
- un premier engrenage (306), positionné sur ledit premier axe (302), pour venir en prise avec un pignon (322) d'un moteur ;
- un fourreau d'entraînement (308) fixé sur ledit deuxième axe (304);
- un deuxième engrenage (310) axialement mobile sur ledit deuxième axe (304), ledit deuxième engrenage (310) étant susceptible de venir sélectivement en prise avec ledit fourreau d'entraînement (308);
- **caractérisée en ce qu'il** comporte :
- un troisième engrenage (312) axialement mobile sur ledit premier axe (302), ledit troisième engrenage (312) étant en prise avec ledit deuxième engrenage (310);
- un quatrième engrenage (318) fixé sur ledit deuxième axe (304), ledit quatrième engrenage (318) étant en prise avec des dents sur ledit premier axe (302);
- un mécanisme d'ajustement de la vitesse (314) dudit deuxième axe (304), ledit mécanisme d'ajustement de vitesse (314) déplaçant axialement ledit troisième engrenage (312) pour mettre en prise et dégager ledit deuxième engrenage (310) avec ledit fourreau d'entraînement (308) et ledit mécanisme d'ajustement de vitesse (314) entraînant ledit premier axe (302) pour entraîner ledit quatrième engrenage (318) ce qui, à son tour, entraîne ledit deuxième axe (304) en entraînant ledit organe de sortie (61) entre une première et une deuxième vitesse.

2. Transmission automatique selon la revendication 1, dans laquelle le mécanisme d'ajustement de vitesse comprend un mécanisme d'embrayage (352, 354) sur le premier axe (302) et un mécanisme de came pour faire coulisser axialement le troisième engrenage (312) sur le premier axe (302).

3. Transmission automatique selon la revendication 2, dans laquelle le mécanisme d'embrayage comporte un premier organe annulaire sollicité (352), qui est susceptible de coulisser axialement sur le premier axe (302), et un deuxième organe annulaire sollicité (354), qui est susceptible de coulisser axialement sur, et de venir en prise avec, le premier axe (302), de manière à ce que le premier organe annulaire (352) vienne en prise avec le deuxième organe annulaire (354) afin d'entraîner le premier axe (302).
